(19) Europäisches Patentamt

European Patent Office

Office européen des brevets

(11) **EP 1 667 459 A1**

(12) **EUROPEAN PATENT APPLICATION**

(43) Date of publication:
07.06.2006 Bulletin 2006/23

(51) Int Cl.:
*H04N 7/26* (2006.01)

(21) Application number: 05018834.1

(22) Date of filing: 30.08.2005

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: 06.12.2004 US 5066

(71) Applicant: **Broadcom Corporation**
**Irvine, CA 92618-7013 (US)**

(72) Inventor: **Knight, Roy**
**Pelham,**
**NH 03076-2923 (US)**

(74) Representative: **Jehle, Volker Armin**
**Bosch, Graf v. Stosch, Jehle**
**Patentanwalt GmbH**
**Flüggenstrasse 13**
**80639 München (DE)**

(54) **Two processor architecture supporting decoupling of outer loop and inner loop in video decoder**

(57) Presented herein are systems, methods, and apparatus for two processor architecture supporting decoupling of the outer loop and the inner loop in a video decoder. In one embodiment, there is presented a video decoder for decoding a data structure. The video decoder comprises an outer loop processor and an inner loop processor. The outer loop processor performs overhead processing for the data structure. The inner loop processor decodes the data structure.

FIGURE 3

## Description

## RELATED APPLICATIONS

## FEDERALLY SPONSORED RESEARCH OR DEVELOPMENT

[Not Applicable]

## [MICROFICHE/COPYRIGHT REFERENCE]

[Not Applicable]

## BACKGROUND OF THE INVENTION

Both MPEG-2 and H.264 use slices to group macroblocks forming a picture. The slices comprise a set of symbols. The symbols are encoded using variable length codes. In H.264, the symbols are encoded using context adaptive codes. The variable length codes of a slice can be decoded independently.

Decoding slices includes overhead prior to decoding the symbols. In H.264, a large number of slices, such as two per macroblock row, are used. Additionally, the slices use reference lists that are built prior to decoding the slice. For example, the reference list can include a list of pictures upon which the macroblocks of the slice can depend. In H.264, a slice can be predicted from as many as 16 reference pictures.

Further limitations and disadvantages of conventional and traditional approaches will become apparent to one of ordinary skill in the art through comparison of such systems with the present invention as set forth in the remainder of the present application with reference to the drawings.

## BRIEF SUMMARY OF THE INVENTION

Presented herein are systems, methods, and apparatus for two processor architecture supporting decoupling of the outer loop and the inner loop in a video decoder.

In one embodiment, there is presented a video decoder for decoding a data structure. The video decoder comprises an outer loop processor and an inner loop processor. The outer loop processor performs overhead processing for the data structure. The inner loop processor decodes the data structure.

In another embodiment, there is a method for decoding a data structure. The method comprises performing overhead processing for the data structure at a first processor; and decoding the data structure at a second processor.

According to an aspect of the invention, a video decoder for decoding a data structure is provided, said video decoder comprising:

    an outer loop processor for performing overhead processing for the data structure; and
an inner loop processor for decoding the data structure.

Advantageously, the data structure comprises a slice.
Advantageously, performing the overhead processing comprises generating a reference list for the data structure.

 Advantageously, the reference list comprises a list of reference pictures from which the data structure is predicted.

Advantageously, the video decoder further comprises:

    a first queue for providing elements to the inner loop processor from the outer loop processor, the elements comprising a pointer indicating a location of the data structure.

Advantageously, the elements further comprise:

    an indicator indicating a channel context.

Advantageously, the video decoder further comprises:

    a second queue for providing elements from the inner loop processor to the outer loop processor.

Advantageously, the outer loop processer performs overhead processing for another data structure while the inner loop processor decodes the data structure.
Advantageously, the data structure comprises a slice, and further comprising:

    a decoded picture buffer structure for storing picture indicators and outputting a particular one of the picture indicators when the outer loop processor performs overhead processing for each slice in a picture; and
    an intermediate structure for storing the particular one of the picture indicators and outputting the particular one of the picture indicators when the inner loop processer decodes each slice in a picture indicated by the particular one of the picture indicators.

According to an aspect of the invention, a method for decoding a data structure is provided, said method comprising:

    performing overhead processing for the data structure at a first processor; and
    decoding the data structure at a second processor.

Advantageously, the data structure comprises a slice.
Advantageously, performing the overhead processing comprises generating a reference list for the data structure.
Advantageously, the reference list comprises a list of reference pictures from which the data structure is predicted.

Advantageously, the method further comprises:

provided elements to the second processor from the first processor, the elements comprising a pointer indicating a location of the data structure.

Advantageously, the elements further comprise:

an indicator indicating a channel context.

Advantageously, the method further comprises:

providing elements from the second processor to the first processor.

Advantageously, the first processor performs over head processing for another data structure while the second processor decodes the data structure.

Advantageously, the data structure comprises a slice, and further comprising:

storing picture indicators in a decoded picture buffer structure;

outputting a particular one of the picture indicators from the decoded picture buffer structure when the outer loop processor performs overhead processing for each slice in a picture;

storing the particular one of the picture indicators in an intermediate structure; and

outputting the particular one of the picture indicators from the intermediate structure when the inner loop processer decodes each slice in a picture indicated by the particular one of the picture indicators.

These and other features and advantages of the present invention may be appreciated from a review of the following detailed description of the present invention, along with the accompanying figures in which like reference numerals refer to like parts throughout.

**BRIEF DESCRIPTION OF SEVERAL VIEWS OF THE DRAWINGS**

**FIGURE 1** is a block diagram of a frame;
**FIGURE 2A** is a block diagram describing spatially encoded macroblocks;
**FIGURE 2B** is a block diagram describing temporally encoded macroblocks;
**FIGURE 2C** is a block diagram describing partitions in a block;
**FIGURE 3** is a block diagram describing an exemplary video decoder system in accordance with an embodiment of the present invention;
**FIGURE 4** is a block diagram describing an interface between an outer loop processor and an inner loop processor in accordance with an embodiment of the present invention;
**FIGURE 5** is a flow diagram for decoding a data structure in accordance with an embodiment of the present invention;
**FIGURE 6** is a block diagram describing a decoded picture buffer structure and an intermediate structure in accordance with an embodiment of the present invention; and
**FIGURE 7** is a flow diagram for providing indicators in accordance with an embodiment of the present invention.

**DETAILED DESCRIPTION OF THE INVENTION**

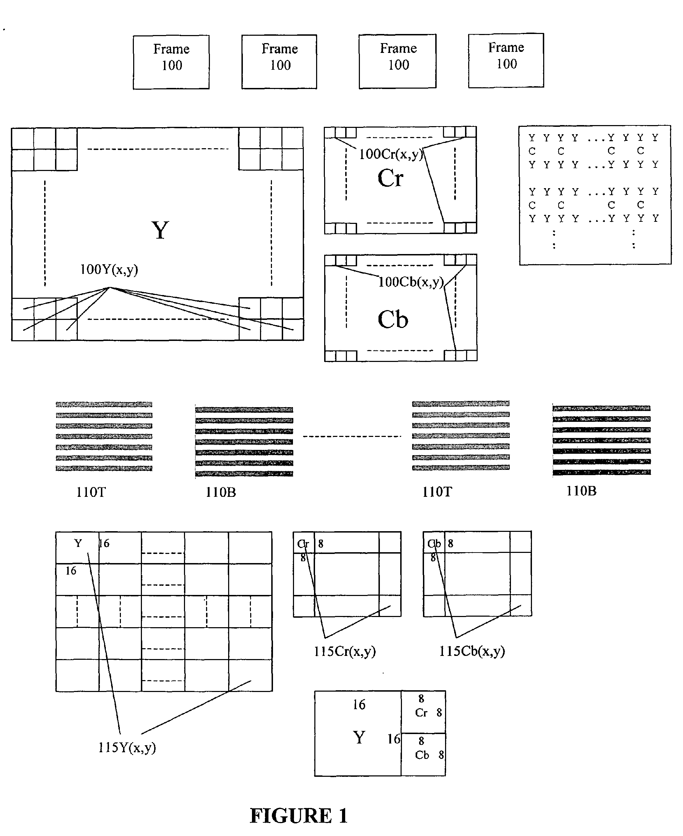

Referring now to **FIGURE 1**, there is illustrated a block diagram of a frame 100. A video camera captures frames 100 from a field of view during time periods known as frame durations. The successive frames 100 form a video sequence. A frame 100 comprises two-dimensional grid(s) of pixels 100 (x, y) .
For color video, each color component is associated with a two-dimensional grid of pixels. For example, a video can include luma, chroma red, and chroma blue components. Accordingly, the luma, chroma red, and chroma blue components are associated with a two-dimensional grid of pixels 100Y (x, y), 100Cr (x, y), and 100Cb (x, y), respectively. When the grids of two dimensional pixels 100Y (x, y), 100Cr (x, y), and 100Cb (x, y) from the frame are overlayed on a display device 110, the result is a picture of the field of view at the frame duration that the frame was captured.
Generally, the human eye is more perceptive to the luma characteristics of video, compared to the chroma red and chroma blue characteristics. Accordingly, there are more pixels in the grid of luma pixels 100Y (x,y) compared to the grids of chroma red 100Cr(x,y) and chroma blue 100Cb(x,y). In the MPEG 4:2:0 standard, the grids of chroma red 100Cr(x,y) and chroma blue pixels 100Cb(x,y) have half as many pixels as the grid of luma pixels 100Y(x,y) in each direction.
The chroma red 100Cr(x,y) and chroma blue 100Cb(x,y) pixels are overlayed the luma pixels in each even-numbered column 100Y(x, 2y) between each even, one-half a pixel below each even-numbered line 100Y (2x, y). In other words, the chroma red and chroma blue pixels 100Cr(x,y) and 100Cb(x,y) are overlayed pixels 100Y (2x+½, 2y).
If the video camera is interlaced, the video camera captures the even-numbered lines 100Y(2x,y), 100Cr (2x,y), and 100Cb(2x,y) during half of the frame duration (a field duration), and the odd-numbered lines 100Y (2x+1,y), 100Cr (2x+1,y), and 100Cb (2x+1,y) during the other half of the frame duration. The even numbered lines 100Y (2x, y), 100Cr (2x, y), and 100Cb (2x, y) form what is known as a top field 110T, while odd-numbered lines 100Y(2x+1,y), 100Cr(2x+1,y), and 100Cb (2x+1,y) form what is known as the bottom field 110B. The top field 110T and bottom field 110T are also two dimensional grid(s) of luma 110YT(x,y), chroma red 110CrT (x,y), and chroma blue 110CbT (x,y) pixels.

Luma pixels of the frame 100Y (x,y), or top/bottom fields 110YT/B(x,y) can be divided into 16x16 pixel 100Y(16x->16x+15, 16y->16y+15) blocks 115Y(x,y). For each block of luma pixels 115Y(x,y), there is a corresponding 8x8 block of chroma red pixels 115Cr(x,y) and chroma blue pixels 115Cb (x,y) comprising the chroma red and chroma blue pixels that are to be overlayed the block of luma pixels 115Y (x,y). A block of luma pixels 115Y(x,y), and the corresponding blocks of chroma red pixels 115Cr(x,y) and chroma blue pixels 115Cb(x,y) are collectively known as a macroblock 120. The macroblocks 120 can be grouped into groups known as slices 122.

The ITU-H.264 Standard (H.264), also known as MPEG-4, Part 10, and Advanced Video Coding, encodes video on a frame by frame basis, and encodes frames on a macroblock by macroblock basis. H.264 specifies the use of spatial prediction, temporal prediction, DCT transformation, interlaced coding, and lossless entropy coding to compress the macroblocks 120.

SPATIAL PREDICTION

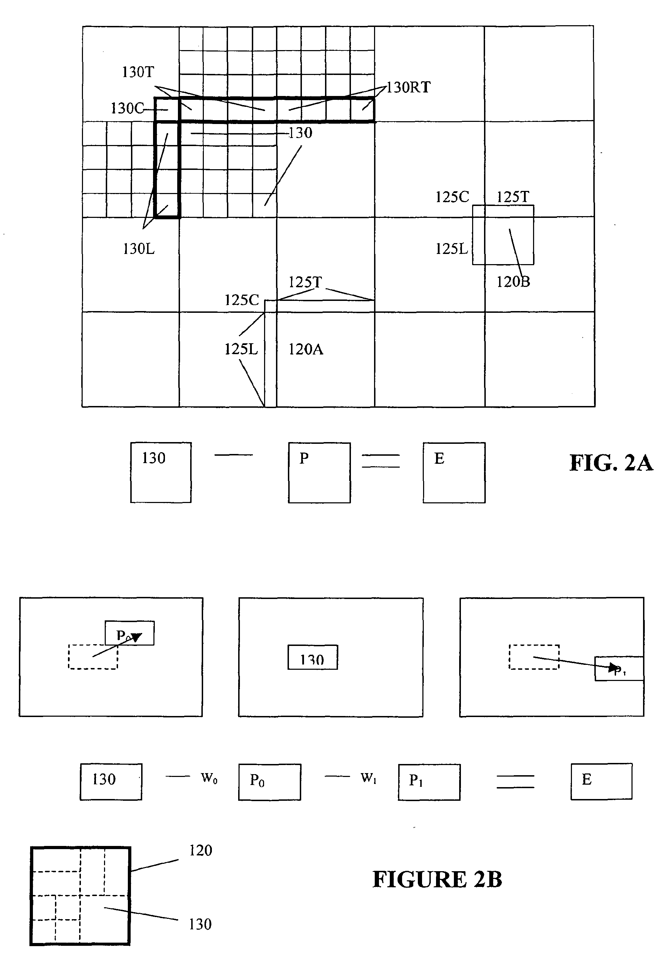

Referring now to **FIGURE 2A**, there is illustrated a block diagram describing spatially encoded macroblocks 120. Spatial prediction, also referred to as intraprediction, involves prediction of frame pixels from neighboring pixels. The pixels of a macroblock 120 can be predicted, either in a 16x16 mode, an 8x8 mode, or a 4x4 mode.

In the 16x16 and 8x8 modes, e.g, macroblock 120a, and 120b, respectively, the pixels of the macroblock are predicted from a combination of left edge pixels 125L, a corner pixel 125C, and top edge pixels 125T. The difference between the macroblock 120a and prediction pixels P is known as the prediction error E. The prediction error E is calculated and encoded along with an identification of the prediction pixels P and prediction mode, as will be described.

In the 4x4 mode, the macroblock 120c is divided into 4x4 partitions 130. The 4x4 partitions 130 of the macroblock 120a are predicted from a combination of left edge partitions 130L, a corner partition 130C, right edge partitions 130R, and top right partitions 130TR. The difference between the macroblock 120a and prediction pixels P is known as the prediction error E. The prediction error E is calculated and encoded along with an identification of the prediction pixels and prediction mode, as will be described. A macroblock 120 is encoded as the combination of the prediction errors E representing its partitions 130.

TEMPORAL PREDICTION

Referring now to **FIGURE 2B**, there is illustrated a block diagram describing temporally encoded macroblocks 120. The temporally encoded macroblocks 120 can be divided into 16x8, 8x16, 8x8, 4x8, 8x4, and 4x4 partitions 130. Each partition 130 of a macroblock 120, is compared to the pixels of other frames or fields for a similar block of pixels P. A macroblock 120 is encoded as the combination of the prediction errors E representing its partitions 130.

The similar block of pixels is known as the prediction pixels P. The difference between the partition 130 and the prediction pixels P is known as the prediction error E. The prediction error E is calculated and encoded, along with an identification of the prediction pixels P. The prediction pixels P are identified by motion vectors MV. Motion vectors MV describe the spatial displacement between the partition 130 and the prediction pixels P. The motion vectors MV can, themselves, be predicted from neighboring partitions.

The partition can also be predicted from blocks of pixels P in more than one field/frame. In bi-directional coding, the partition 130 can be predicted from two weighted blocks of pixels, P0 and P1. According a prediction error E is calculated as the difference between the weighted average of the prediction blocks w0P0+ w1P1 and the partition 130. The prediction error E, an identification of the prediction blocks P0, P1 are encoded. The prediction blocks P0 and P1 are identified by motion vectors MV.

The weights w0, w1 can also be encoded explicitly, or implied from an identification of the field/frame containing the prediction blocks P0 and P1. The weights w0, w1 can be implied from the distance between the frames/fields containing the prediction blocks P0 and P1 and the frame/field containing the partition 130. Where TO is the number of frame/field durations between the frame/field containing P0 and the frame/field containing the partition, and T1 is the number of frame/field durations for P1,

$$w0 = 1 - T0/(T0+T1)$$

$$w1 = 1 - T1/(T0+T1)$$

For a high definition television picture, there are thousands of macroblocks 120 per frame 100. The macroblocks 120, themselves can be partitioned into potentially 16 4x4 partitions 130, each associated with potentially different motion vector sets. Thus, coding each of the motion vectors without data compression can require a large amount of data and bandwidth.

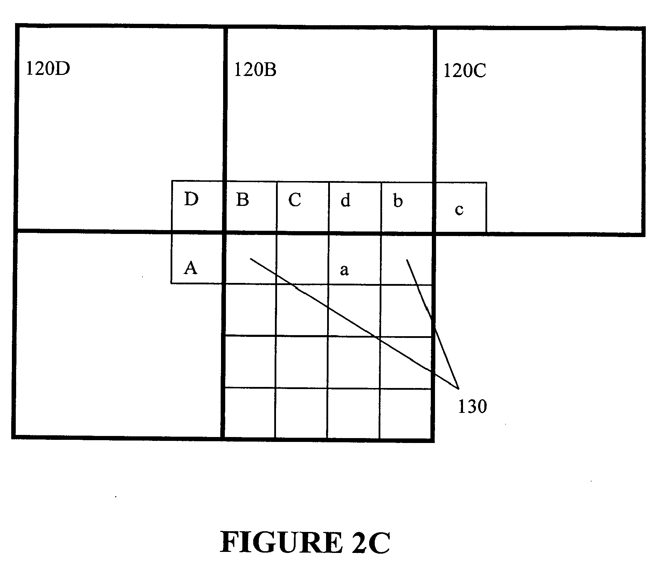

To reduce the amount of data used for coding the motion vectors, the motion vectors themselves are predicted. Referring now to **FIGURE 2C**, there is illustrated a block diagram describing an exemplary partition 130. The motion vectors for the partition 130 can be predicted from the left A, top left corner D, top C, and top right corner C neighboring partitions. For example, the median of the motion vector(s) for A, B, C, and D can be calculated as the prediction value. The motion vector(s) for partition 130 can be coded as the difference (mvDelta) between itself and the prediction value. Thus the motion vector(s) for partition 130 can be represented by an indication of the prediction, median (A,B,C,D) and the difference, mvDelta. Where mvDelta is small, considerable memory and bandwidth are saved.

However, where partition 130 is at the top left corner of a macroblock 120, partition A is in the left neighboring macroblock 120A, partition D is in the top left neighboring macroblock 120D, while partitions B and C are in macroblock 120B. Where partition 130 is at the top right corner of a macroblock 120, the top left corner d and the top b neighboring partitions are in the top neighboring macroblock 120B, while the top right corner neighboring partition c is in the top right corner neighboring macroblock 120C.

The macroblocks 120 forming a picture are grouped into what are known as slices 150. The slices 150 comprise a set of symbols. The symbols are encoded using variable length codes. In H.264, the symbols are encoded using context adaptive codes. The variable length codes of a slice can be decoded independently.

Decoding slices includes overhead prior to decoding the symbols. For example, in H.264, a large number of slices, such as two per macroblock row, are used. The macroblocks 120 from a slice can be predicted from as many as 16 reference pictures.

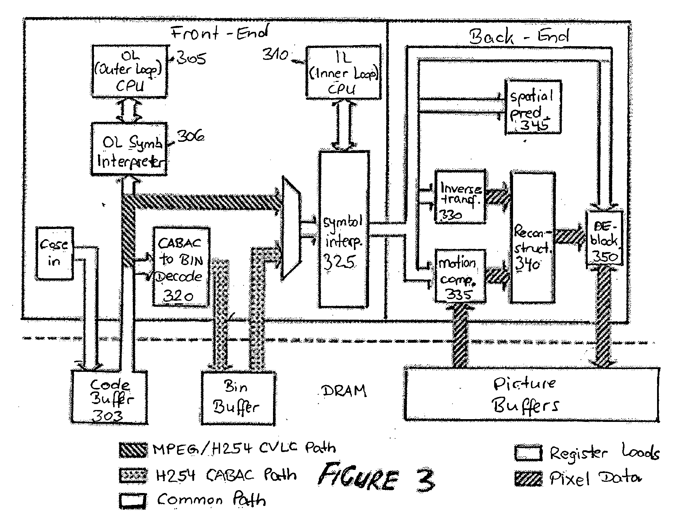

Referring now to **FIGURE 3**, there is illustrated a block diagram describing an exemplary video decoder system 300 for decoding video data in accordance with an embodiment of the present invention. The video decoder system 300 comprises an outer loop processor 305, an inner loop processor 310, a Context Adaptive Binary Arithmetic Code (CABAC) decoder 320, and a symbol interpreter 325.

An encoded video bitstream is received in a code buffer 303. The portions of the bitstream are provided to the outer loop processor 305. Additionally, the portions of the bitstream that are CAVLC coded are also provided directly to the symbol interpreter 325. The portions of the symbols that are CABAC coded are also provided to the CABAC decoder 320. The CABAC decoder 320 converts the CABAC symbols to what are known as BINS and writes the BINs to a Bin Buffer that provides the BINS to the symbol interpreter 325.

The outer loop processor 305 is associated with an outer loop symbol interpreter 306 to interpret the symbols of the bitstream. Because decoding slices includes overhead prior to decoding, in H.264, a large number of slices, such as two per macroblock row, are used. For example, the macroblocks 120 from a slice can be predicted from as many as 16 reference pictures. Accordingly, the outer loop processor 305 parses the slices and performs the overhead functions. The overhead functions can include, for example but not limited to, generating and maintaining the reference lists for each slice, direct-mode table construction, implicit weighted-prediction table construction, memory management, and header parsing. According to certain embodiments of the present invention, the outer loop processor 305 prepares the slice into an internal slice structure wherein the inner loop 310 can decode the prediction errors for each of the macroblocks therein, without reference to any data outside the prepared slice structure. The slice structure can include the associated reference list, direct-mode tables, and implicit weighted prediction tables.

The inner loop processor 310 manages the inverse transformer 330, motion compensator 335, pixel reconstructor 340, the spatial predictor 345, and the deblocker 350 to render pixel data from the slice structure.

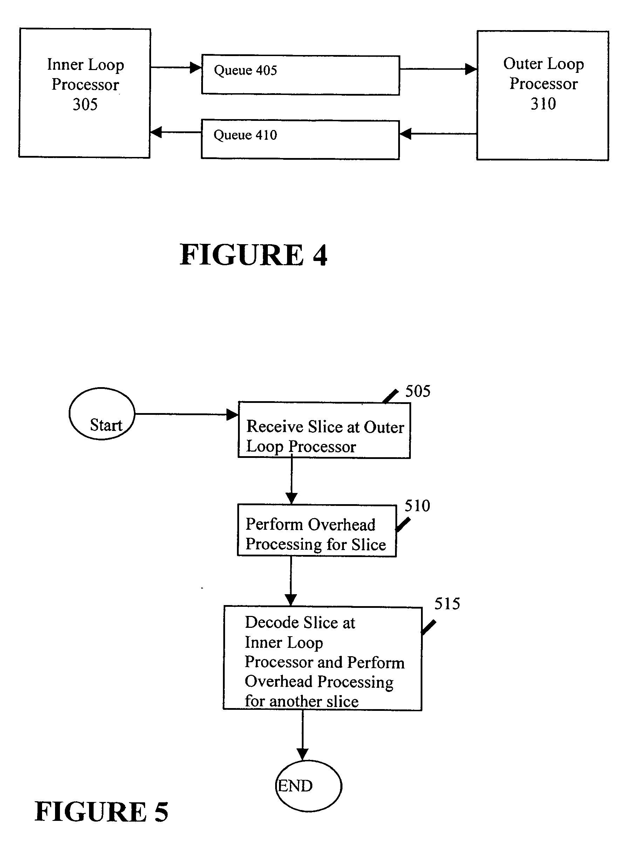

Referring now to **FIGURE 4**, there is illustrated a block diagram describing an exemplary interface between the outer loop processor 305 and the inner loop processor 310. The interface comprises a first queue 405 and a second queue 410. The outer loop processor 305 places the elements onto the queue for the inner loop processor 310. The elements can include a pointer to the slice structures in the memory. According to certain embodiment of the present invention, the elements can also include, for example, an indicator indicating, for example, whether the video data is H.264 or MPEG-2, and a channel context. Responsive to receiving the elements from the first queue 405, the inner loop processor 305 decodes the slice structures. The inner loop processor 305 places the elements on the second queue 410. The elements include an identifier identifying pictures, when the inner loop processor 310 has finished decoding all of the slices of the picture.

Referring now to **FIGURE 5**, there is illustrated a flow diagram describing decoding video data in accordance with an embodiment of the present invention. At 505, the slice is received by the outer loop processor 305. At 510, the outer loop processor 305 performs the overhead processing for the slice. The overhead processing can include, for example, generating reference lists for the slice, direct-mode table construction, implicit weighted-prediction table construction, memory management, and header parsing. According to certain aspects of the present invention, the outer loop processor 305 generates a slice structure for the slice, wherein the prediction error for the slice can be generated from the slice structure without reference to additional data. At 515, the inner loop processor 310 decodes the slice, while the outer loop processor performs the overhead processing for another slice. This, 515, can be repeated for any number of slices.

The H.264 specification provides for what is known as a decoded picture buffer structure. The decoded picture buffer structure provides a list of decoded pictures in display order. When a picture is finished decoding, the decoded picture buffer structure is updated and outputs an indicator indicating the next picture for display. According to H.264 specifications, the output indicator is removed from the decoded picture buffer list. The H.264 specification requires that this removal occur before the beginning of decoding of the next picture.

To allows the outer loop processor 305 to process slices from pictures that are ahead of the pictures containing the slices processed by the inner loop processor 310, an intermediate stage stores the outputted indicators.

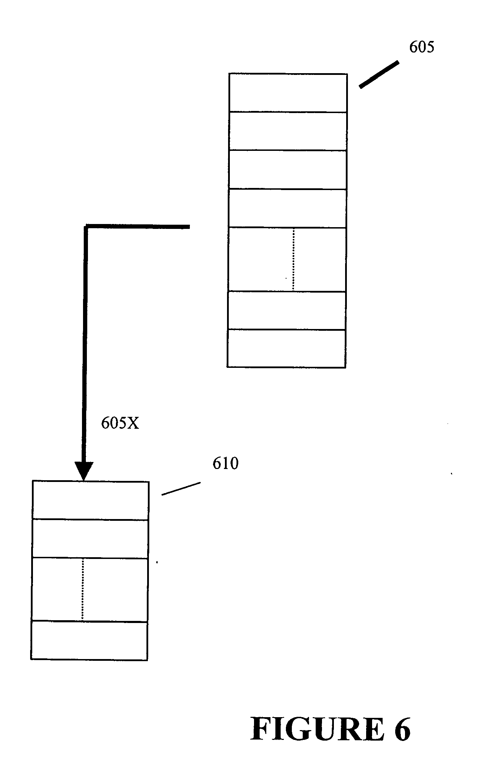

Referring now to **FIGURE 6**, there is illustrated a block diagram describing exemplary data structures in accordance with an embodiment of the present invention. The decoded picture buffer structure 605 provides a list of decoded pictures in display order. When a picture is finished decoding, the outer loop processor 305 updates the decoded picture buffer structure. The decoded picture buffer 605 outputs an indicator 605X indicating the next picture for display. According to H.264 specifications, the output indicator 605X is removed from the decoded picture buffer list.

The outputted indicator 605X is stored in an intermediate structure 610. The intermediate structure 610 stores the outputted indicators 605X until the inner loop processor 310 finishes processing each of the slices in the picture indicated by indicator 605X. As noted above, when the inner loop processor 310 finishes decoding all of the slices of a picture, the inner loop processor 310 notifies the outer loop processor 310, via queue 410. Responsive to receiving the foregoing notification, the outer loop processor 310 outputs the indicator 605X from the intermediate structure 610.

The intermediate structure 610 stores the indicators in the order that they were released from the decoded picture buffer 605, thus preserving the display order of the indicators.

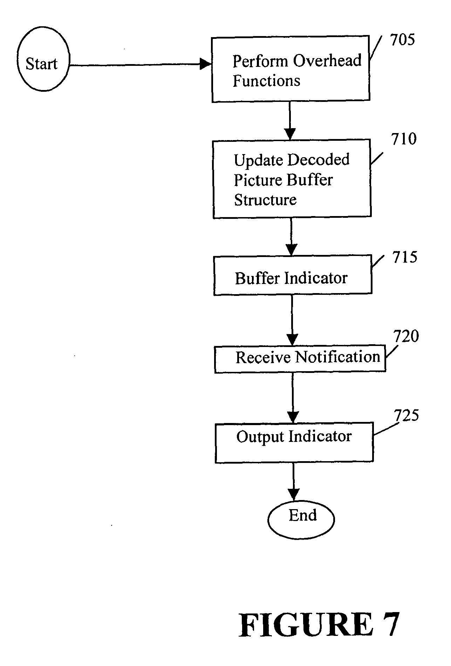

Referring now to **FIGURE 7**, there is illustrated a flow diagram for providing indicators indicating pictures in a display order in accordance with an embodiment of the present invention. At 705, the outer loop processor 305 finishes the overhead functions for each of the slices in a picture. At 710, the outer loop processor 305 updates the decoded picture buffer structure 605, causing the decoded picture buffer structure 605 to output an indicator 605X indicating the next picture in the display order. At 715, the intermediate structure 610 buffers the indicator 605X. At 720, the outer loop processor 305 receives a notification via queue 410 that the inner loop processor has finished processing all of the slices of the picture indicated by indicator 605X. Responsive thereto, the outer loop processor 305 at 725 causes the intermediate structure 610 to output the indicator 605X.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A video decoder for decoding a data structure, said video decoder comprising:

> an outer loop processor for performing overhead processing for the data structure; and
> an inner loop processor for decoding the data structure.

2. The video decoder of claim 1, wherein the data structure comprises a slice.

3. The video decoder of claim 1, wherein performing the overhead processing comprises generating a reference list for the data structure.

4. The video decoder of claim 3, wherein the reference list comprises a list of reference pictures from which the data structure is predicted.

5. The video decoder of claim 1, further comprising:

> a first queue for providing elements to the inner loop processor from the outer loop processor, the elements comprising a pointer indicating a location of the data structure.

6. A method for decoding a data structure, said method comprising:

> performing overhead processing for the data structure at a first processor; and
> decoding the data structure at a second processor.

7. The method of claim 6, wherein the data structure comprises a slice.

8. The method of claim 6, wherein performing the overhead processing comprises generating a reference list for the data structure.

9. The method of claim 8, wherein the reference list comprises a list of reference pictures from which the data structure is predicted.

**10.** The method of claim 6, further comprising:

providing elements to the second processor from the first processor, the elements comprising a pointer indicating a location of the data structure.

| Frame 100 | Frame 100 | Frame 100 | Frame 100 |

Y

100Y(x,y)

100Cr(x,y)

Cr

100Cb(x,y)

Cb

```
Y  Y  Y  Y  ...Y  Y  Y  Y
C  C        C  C
Y  Y  Y  Y  ...Y  Y  Y  Y

Y  Y  Y  Y  ...Y  Y  Y  Y
C  C        C  C
Y  Y  Y  Y  ...Y  Y  Y  Y
     :           :
     :           :
```

110T        110B        110T        110B

Y    16
16

115Y(x,y)

Cr  8
8

115Cr(x,y)

Cb  8
8

115Cb(x,y)

| 16 | 8 Cr 8 |
| Y    16 | 8 Cb 8 |

**FIGURE 1**

130T
130C
130RT
130
130L
125C 125T
125L
120B
125T
125C
125L
120A

130 — P ═ E

**FIG. 2A**

$P_0$
130
$P_1$

130 — $w_0$ $P_0$ — $w_1$ $P_1$ ═ E

120
130

**FIGURE 2B**

| 120D | 120B | | | | 120C |
|------|------|---|---|---|------|
| | D | B | C | d | b | c |
| | A | | | a | | |

**FIGURE 2C**

130

Front-End · Back-End

OL (Outer Loop) CPU · 305

IL (Inner Loop) CPU · 310

OL Symb Interpreter · 306

spatial pred. 345

Case in

CABAC to BIN Decode 320

symbol interp. 325

Inverse transf. 330

Recon-struct. 340

DE-block 350

motion comp. 335

Code Buffer 303

Bin Buffer

DRAM

Picture Buffers

MPEG/H254 CVLC Path

H254 CABAC Path

Common Path

Register Loads

Pixel Data

FIGURE 3

Inner Loop
Processor
305

Queue 405

Outer Loop
Processor
310

Queue 410

# FIGURE 4

Start

Receive Slice at Outer
Loop Processor

505

Perform Overhead
Processing for Slice

510

Decode Slice at
Inner Loop
Processor and Perform
Overhead Processing
for another slice

515

END

# FIGURE 5

605

605X

610

**FIGURE 6**

```
┌─────────────┐
│    Start    │ ──────────────►
└─────────────┘
```

                    ┌──────────────────────┐  705
                    │ Perform Overhead     │
                    │ Functions            │
                    └──────────────────────┘
                              │
                              ▼
                    ┌──────────────────────┐  710
                    │ Update Decoded       │
                    │ Picture Buffer       │
                    │ Structure            │
                    └──────────────────────┘
                              │
                              ▼
                    ┌──────────────────────┐  715
                    │ Buffer Indicator     │
                    └──────────────────────┘
                              │
                              ▼
                    ┌──────────────────────┐  720
                    │ Receive Notification │
                    └──────────────────────┘
                              │
                              ▼
                    ┌──────────────────────┐  725
                    │ Output Indicator     │
                    └──────────────────────┘
                              │
                              ▼
                        ┌───────────┐
                        │    End    │
                        └───────────┘

# FIGURE 7

**EP 1 667 459 A1**

**European Patent Office**

**EUROPEAN SEARCH REPORT**

Application Number

EP 05 01 8834

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/219072 A1 (MACINNIS ALEXANDER G ET AL) 27 November 2003 (2003-11-27) * figure 5 * * paragraphs [0015], [0016], [0035] - [0041] * ----- | 1-10 | H04N7/26 |
| A | WO 01/98892 A (BOPS, INC) 27 December 2001 (2001-12-27) * abstract; figure 10 * ----- | 1-10 | |
| A | US 2002/041626 A1 (YOSHIOKA KOSUKE ET AL) 11 April 2002 (2002-04-11) * abstract; figure 4 * * paragraphs [0137] - [0157] * ----- | 1-10 | |
| A | EP 1 351 516 A (BROADCOM CORPORATION) 8 October 2003 (2003-10-08) * the whole document * ----- | 1-10 | |
| A | US 6 574 273 B1 (LUNA AMELIA CARINO ET AL) 3 June 2003 (2003-06-03) * the whole document * ----- | 1-10 | TECHNICAL FIELDS SEARCHED (IPC) H04N |

The present search report has been drawn up for all claims

| Place of search | Date of completion of the search | Examiner |
|---|---|---|
| Munich | 31 March 2006 | Cakiroglu, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

15

**ANNEX TO THE EUROPEAN SEARCH REPORT
ON EUROPEAN PATENT APPLICATION NO.**

EP 05 01 8834

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2006

| Patent document cited in search report | | Publication date | Patent family member(s) | | Publication date |
|---|---|---|---|---|---|
| US 2003219072 | A1 | 27-11-2003 | NONE | | |
| WO 0198892 | A | 27-12-2001 | NONE | | |
| US 2002041626 | A1 | 11-04-2002 | NONE | | |
| EP 1351516 | A | 08-10-2003 | NONE | | |
| US 6574273 | B1 | 03-06-2003 | AU<br>WO | 2739901 A<br>0152540 A1 | 24-07-2001<br>19-07-2001 |

EPO FORM P0459

For more details about this annex : see Official Journal of the European Patent Office, No. 12/82